# EUROPÄISCHE PATENTSCHRIFT

(11) **EP 1 409 323 B1**
(45) Veröffentlichungstag und Bekanntmachung des Hinweises auf die Patenterteilung: **11.04.2007**
(21) Anmeldenummer: 01955330.4
(22) Anmeldetag: 04.07.2001
(51) Int. Cl.: B61H 5/00, B60T 1/06, B61C 9/44, F16D 65/12

(54) **ANTRIEBSEINHEIT ZUM ANTRIEB MINDESTENS EINER RADANTRIEBSWELLE, INSBESONDERE EINER RADSATZWELLE**
DRIVE UNIT FOR DRIVING AT LEAST ONE WHEEL DRIVE SHAFT, ESPECIALLY A WHEELSET AXLE
UNITE D'ENTRAINEMENT SERVANT A ENTRAINER AU MOINS UN ARBRE D'ENTRAINEMENT DE ROUES, NOTAMMENT UN ESSIEU

(30) Priorität: 07.07.2000 DE 10032707
(43) Veröffentlichungstag der Anmeldung: 21.04.2004
(73) Patentinhaber: Voith Turbo GmbH & Co. KG, 89522 Heidenheim (DE)
(72) Erfinder: REUSCH, Jürgen, 89568 Hermaringen (DE); DENTELER, Frieder, 86720 Nördlingen (DE); KAMPER, Harald, 89520 Heidenheim (DE)
(74) Vertreter: Dr. Weitzel & Partner
(86) Internationale Anmeldenummer: PCT/EP2001/007662
(87) Internationale Veröffentlichungsnummer: WO 2002/004274

(56) Entgegenhaltungen:
- EP-A- 0 007 021
- DE-A- 4 137 233
- DE-A- 19 506 678
- DE-U- 1 921 565
- US-A- 4 042 071
- US-A- 4 729 455

## Beschreibung

Die Erfindung betrifft eine Antriebseinheit für den Antrieb mindestens einer Radantriebswelle, insbesondere einer Radsatzwelle, für Schienenfahrzeuge, im einzelnen mit den Merkmalen aus dem Oberbegriff des Anspruchs 1.

Eine solche Antriebseinheit ist aus DE 4 137 233 A bekannt geworden.

Die dort beschriebene Lösung hat jedoch den Nachteil, dass der notwendige Bauraum relativ groß ist, was sich besonders bei Fahrzeugen im Niederflurbereich als nachteilig auswirkt. Auch sind Fertigung und Montage relativ aufwendig.

Eine ähnliche Bauart einer Antriebseinheit ist aus US 4 042 071 bekannt geworden - siehe dort Spalte 1, Zeilen 12-14.

Antriebseinheiten für Schienenfahrzeuge, insbesondere mit integriertem Querantrieb, sind in einer Vielzahl von Ausführungen bekannt. Diese umfassen eine Antriebsmaschine, welche mit einer Getriebebaueinheit gekoppelt ist. Der Abtrieb der Getriebebaueinheit wird von einer Hohlwelle gebildet, welche über eine Gelenkkupplung mit der Radantriebswelle, insbesondere der Radsatzwelle, zum Ausgleich der Relativbewegungen zwischen Radsatzwelle und Querantrieb gekoppelt ist. Die Antriebsmaschine ist dabei in unmittelbar räumlicher Nähe zur Getriebebaueinheit angeordnet, vorzugsweise sind beide - Antriebsmaschine und Getriebebaueinheit - im Bereich ihrer Gehäuse aneinander angeflanscht. Durch diese Maßnahme sind lediglich ein radiales Lager für die Antriebsmaschine und ein entsprechendes Lagerschild erforderlich. Die Ankopplung der Abtriebswelle der Antriebsmaschine an die Getriebeeingangswelle erfolgt über eine drehsteife und radialsteife sogenannte Membrankupplung. Die Getriebebaueinheit selbst ist meist zweistufig oder einstufig mit Zwischenrad ausgeführt. Das Abtriebszahnrad sitzt dabei auf der Hohlwelle, wobei dieses entweder drehfest mit der Hohlwelle gekoppelt ist oder aber mit dieser eine bauliche Einheit bildet. Die Baueinheit aus Antriebsmaschine und Getriebebaueinheit, welche auch als integrierter Querantrieb bezeichnet wird, ist nur an drei Punkten im primär abgefederten Drehgestellrahmen befestigt. Bei Bedarf ist der Antriebseinheit eine Bremseinrichtung zugeordnet, wobei die Bremsscheibe auf der Hohlwelle angeordnet ist. Die Anordnung der Betätigungselemente erfolgt im Gehäuse der Getriebebaueinheit. Der Nachteil der bisherigen Lösung besteht darin, daß zum einen die Gesamtkosten für die konstruktive Umsetzung und Fertigung relativ hoch sind. Des weiteren wird insbesondere für Ausführungen, welche in Niederflurfahrzeugen zum Einsatz gelangen sollen, der zur Verfügung stehende radiale und axiale Bauraum durch immer kleiner werdende Raddurchmesser bei gleichzeitig größer werdenden Abtriebshohlwellen-Innendurchmesser infolge der weicheren Federungen erheblich reduziert. Für die Anordnung der Bremseinrichtung in diesem Bereich zur Erzielung einer ausreichenden Bremsverzögerung steht somit nicht mehr genügend Bauraum zur Verfügung. Lösungen dafür sind die Anordnung der Bremseinrichtung an einem anderen Ort oder aber der Verzicht auf konventionelle mechanische Bremseinrichtungen und Einsatz anderer Bremssysteme, beispielsweise elektrischer Bremssysteme, welche jedoch kostenintensiver sind.

Der Erfindung lag daher die Aufgabe zugrunde, eine Antriebseinheit für eine Radantriebswelle, insbesondere einer Radsatzwelle, insbesondere für den Einsatz von Schienenfahrzeugen der eingangs Art, derart weiterzuentwickeln, daß eine ausreichende Bremsverzögerung mit einfachen Mitteln auch bei immer geringer werdenden axialem und radialem Bauraum erzielt wird. Die konstruktive Lösung soll sich dabei durch eine einfache Ausführung, kostengünstige Fertigung und Montage auszeichnen. Des weiteren soll die erfindungsgemäße Lösung insbesondere für Fahrzeuge im Niederflurbereich anwendbar sein.

Die erfindungsgemäße Lösung ist durch die Merkmale des Anspruchs 1 charakterisiert. Vorteilhafte Ausgestaltungen sind in den Unteransprüchen wiedergegeben.

Die Antriebseinheit für den Antrieb mindestens einer Radantriebswelle, insbesondere einer Radsatzwelle, umfaßt einen Querantrieb mit einer Antriebsmaschine und einer mit dieser gekoppelten Getriebebaueinheit. Der Abtrieb der Getriebebaueinheit ist als Hohlwelle ausgeführt-und über eine Kupplung, insbesondere eine Gelenkkupplung, mit der Radantriebswelle bzw. der Radsatzwelle verbunden. Die Bremseinrichtung umfaßt zwei Teilbremseinrichtungen, mittels welchen die insgesamt erforderliche Bremskraft durch die Betätigung beider Teilbremseinrichtungen erzeugbar ist.

Die erfindungsgemäße. Lösung bietet den Vorteil, daß durch die Aufteilung auf mehrere Bremseinrichtungen diese insgesamt hinsichtlich ihrer Abmessungen in radialer und axialer Richtung jeweils kleiner gehalten werden können und somit der zur Verfügung stehende Bauraum optimal genutzt wird.

Bezüglich der Anordnung der einzelnen Teilbremseinrichtungen bestehen eine Vielzahl von Möglichkeiten. Diese können dabei entweder beidseitig der Getriebebaueinheit angeordnet werden, wobei eine der beiden Teilbremseinrichtungen zwischen Getriebebaueinheit und erstem Kupplungselement der zur Kopplung mit der Radsatzwelle erforderlichen Kupplung angeordnet ist. Zur Bereitstellung der erforderlichen Bremskraft unter Berücksichtigung des erforderlichen Bauraumes für die einzelnen Teilbremseinrichtungen wurde auf zusätzliche platzeinnehmende Befestigungsmittel für die miteinander zu koppelnden Elemente verzichtet und konstruktiv eine Vereinfachung des Gesamtsystems vorgenommen. Dabei ist die Hohlwelle einstückig mit mindestens einem der Befestigungsflansche für eine der Teilbremseinrichtungen ausgeführt. In einer weiteren vorteilhaften Ausgestaltung wird ebenfalls das erste Kupplungsteil der Gelenkkupplung einstückig mit der Hohlwelle ausgeführt. Dadurch wird gegenüber dem bei Ausführungen gemäß dem Stand der Technik der für die Verbindungselemente erforderliche radiale Bauraum erheblich reduziert. Die erfindungsgemäße Lösung bietet den Vorteil, daß der zur Verfügung stehende radiale und axiale Bauraum durch die immer kleiner werdenden Raddurchmesser bei gleichzeitig größer werdenden Abtriebshohlwellen-Innendurchmesser infolge der weicheren Federungen in optimaler Weise unter Bereitstellung der erforderlichen Bremsverzögerung ausgenutzt wird.

Bezüglich der einteiligen Ausführung der Hohlwelle und einem Befestigungsflansch einer Teilbremseinrichtung und/oder des ersten Kupplungselementes der Gelenkkupplung bestehen ebenfalls eine Mehrzahl von Möglichkeiten. Dabei kann die Ausführung einstückig als Gußteil oder Schmiedeteil erfolgen. Die konkrete Auswahl hängt jedoch von den Einsatzerfordernissen ab und liegt im Ermessen des zuständigen Fachmannes.

Unter einem weiteren Aspekt der Erfindung besteht auch die Möglichkeit, beide Teilbremseinrichtungen zwischen Getriebebaueinheit und Gelenkkupplung anzuordnen. In diesem Fall können beide Befestigungsflansche mit der Hohlwelle eine bauliche Einheit bilden.

Erfindung gemäß ist vorgesehen, daß das Getriebegehäuse einteilig ausgeführt ist. Die Abstützung der Hohlwelle erfolgt über eine Lageranordnung im Gehäuse der Getriebebaueinheit. Zur Vereinheitlichung und Standardisierung ist vorgesehen, daß der Lageraußendurchmesser für alle Ausführungsvarianten identisch ist, während die Abstimmung an die Einsatzerfordernisse über variable Lageranordungsinnendurchmesser und damit Hohlwellenaußendurchmesser erfolgt.

Die erfindungsgemäße Lösung ist nachfolgend anhand von Figuren erläutert. Darin ist im einzelnen folgendes dargestellt:
- Fig. 1: verdeutlicht anhand eines Axialschnittes in schematisch vereinfachter Darstellung den Grundaufbau einer erfindungsgemäß gestalteten Antriebseinheit;
- Fig. 2a und 2b: verdeutlichen die Kopplung der Befestigungsflansche der einzelnen Teilbremseinrichtungen mit der Hohlwelle.

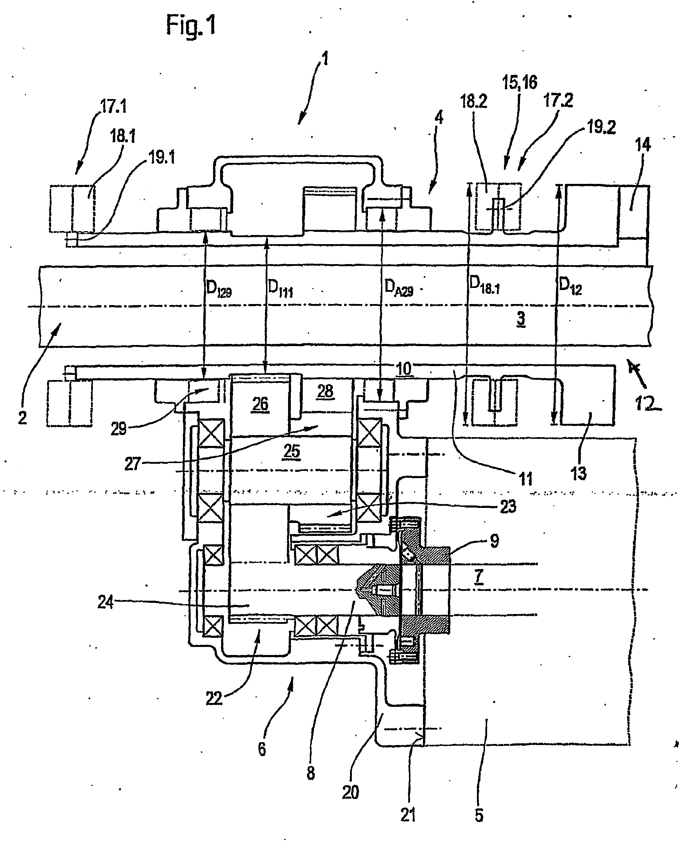

Figur 1 verdeutlicht in schematisch vereinfachter Darstellung den Grundaufbau einer erfindungsgemäß gestalteten Antriebseinheit zum Antrieb mindestens einer, mit mindestens einem Rad gekoppelten Radantriebswelle, welche im dargestellten Fall von einer Radsatzwelle 3 gebildet wird. Die Antriebseinheit 1 umfaßt einen integrierten Querantrieb 4. Dieser umfaßt eine Antriebsmaschine 5, welche mit der Getriebebaueinheit 6 gekoppelt ist. Zu diesem Zweck ist die Antriebswelle 7 der Antriebsmaschine 5 drehfest mit einem Eingang 8 der Getriebebaueinheit 6 verbunden, vorzugsweise über ein Kupplungselement 9 in Form einer drehsteifen und in radialer Richtung steif ausgeführten Membrankupplung. Die Getriebebaueinheit 6 umfaßt einen Abtrieb 10, welcher von einer, die Radsatzwelle 3 in Umfangsrichtung und über wenigstens einen Teil ihrer axialen Erstreckung umschließenden Hohlwelle 11 gebildet wird. Diese ist über eine Gelenkkupplung 12 mit der Radsatzwelle 3 verbunden. Die Gelenkkupplung 12 umfaßt dabei einen ersten Kupplungsteil 13 und einen zweiten Kupplungsteil 14, welche miteinander drehelastisch verbindbar sind. Der erste Kupplungsteil 13 ist dabei mit der Hohlwelle 11 drehfest verbunden. Der zweite Kupplungsteil 14 ist mit der Radsatzwelle 3 wenigstens mittelbar drehfest gekoppelt. Wenigstens mittelbar bedeutet dabei, daß die Anbindung direkt an die Radsatzwelle oder aber über weitere Übertragungselemente z. B. einer zweiten Kupplungsebene erfolgt. In einer vorteilhaften Ausgestaltung sind die Hohlwelle 11 und der erste Kupplungsteil 13 einteilig ausgeführt. Des weiteren umfaßt die Antriebseinheit 1 eine Bremseinrichtung 15, welche vorzugsweise in Form einer Scheibenbremseinheit 16 ausgebildet ist.

Erfindungsgemäß umfaßt die Bremseinrichtung 15 mindestens zwei Teilbremseinrichtungen 17.1 und 17.2, welche jeweils als Scheibenbremseinrichtungen ausgeführt sind. Die erforderliche Gesamtbremskraft wird somit von zwei Teilbremseinrichtungen 17.1 und 17.2 erzeugt. Diese umfassen dabei eine hier lediglich angedeutete Bremsscheibe 18.1 bzw. 18.2, welche an der Hohlwelle 11 befestigbar sind. Zu diesem Zweck weist die Hohlwelle jeweils zwei Befestigungsflansche 19.1 und 19.2 auf, welche mit der Hohlwelle 11 eine bauliche Einheit bilden und zumindest ein Flansch - der zwischen Getriebebaueinheit 6 und Gelenkkupplung 12 angeordnete Befestigungsflansch - vorzugsweise mit der Hohlwelle 11 aus einem Bauteil gebildet wird. Der andere zweite Befestigungsflansch wird mittels Befestigungselementen an der Hohlwelle 11 befestigt. Die beiden Befestigungsflansche 19.1 und 19.2 sind dabei zu beiden Seiten der Getriebebaueinheit 6 angeordnet. Die hier nicht dargestellten Betätigungselemente können somit auf einfache Art und Weise am Gehäuse 20 der Getriebebaueinheit angeordnet und befestigt werden. Die einteilige Ausführung der Hohlwelle 11 mit gleichzeitig integriertem Befestigungsflansch 19.1 bzw. 19.2 für die Teilbremseinrichtungen 17.1 und 17.2 und der Entfall der aus dem Stand der Technik bekannten Planverzahnung zwischen der Hohlwelle 11 und dem ersten Kupplungsteil 13 bietet neben einer kostengünstigeren Fertigung den Vorteil des Erfordernisses geringeren radialen Bauraumes. Durch den Entfall der Planverzahnung zwischen der Hohlwelle 11 und dem ersten Kupplungsteil 13 wird in radialer Richtung weniger Bauraum für die Kopplung zwischen Hohlwelle 11 und erstem Kupplungsteil 13 benötigt. Des weiteren kann durch die Aufteilung der Bremskraft auf zwei Bremseinrichtungen der immer geringer werdende zur Verfügung stehende radiale und axiale Bauraum zwischen Hohlwelle 11 und dem Raddurchmesser bei gleichzeitig größer werdendem Hohlwellen-Innendurchmesser D_{I11} optimal genutzt werden.

Die Antriebsmaschine 5 und die Getriebebaueinheit 6 sind räumlich nah beieinander angeordnet, vorzugsweise im Bereich ihrer Gehäuse 21 und 20 aneinander angeflanscht. Bezüglich des Aufbaus der Getriebebaueinheit 6 bestehen ebenfalls eine Vielzahl von Möglichkeiten. Dieses umfaßt im einfachsten Fall zwei Stirnradpaare, einen ersten Stirnradzug 22 und einen zweiten Stirnradzug 23. Der erste Stirnradzug 22 umfaßt ein mit der Getriebeeingangswelle 8 drehfest gekoppeltes Stirnrad 24, wobei das Stirnrad 24 entweder mit der Getriebeeingangswelle 8 eine integrale Baueinheit bildet oder aber drehfest mit dieser verbunden ist. Das Stirnrad 24 kämmt mit einem auf einer Zwischenwelle 25 angeordneten Stirnrad 26. Auf der Zwischenwelle 25 ist des weiteren ein zweites Stirnrad 27 angeordnet, welches Bestandteil des zweiten Stirnradzuges 23 ist und mit einem mit der Hohlwelle 11 drehfest verbundenen Stirnrad 28 kämmt. In einer besonders vorteilhaften Ausführungsform sind Hohlwelle 11 und Stirnrad 28 als einteiliges Bauteil ausgeführt. Bezüglich der Fertigung kann das einteilige Bauelement aus Hohlwelle 11, dem Befestigungsflansch 19.2 sowie dem ersten Kupplungsteil 13 und optional auch dem Stirnrad 28 als Guß- oder Schmiedeteil ausgeführt werden. Dadurch ist ein bei minimalem Außendurchmesser der Gelenkkupplung 12, hier mit D₁₂ und der Bremsscheiben, hier mit D_{18.1 bzw}. ₁₈.₂ ein gleichzeitig maximaler Innendurchmesser D_{I11} möglich.

Unter einem weiteren Aspekt der Erfindung ist das Gehäuse 20 der Getriebebaueinheit 6 einteilig ausgeführt, wobei die Lagerung 29 der Hohlwelle 11 im Gehäuse 20 hinsichtlich ihres Innendurchmessers D_{I29} eine feine Abstufung bei gleichem Wälzlageraußendurchmesser D_{A29} erfährt. Durch diese Maßnahme wird eine sehr kleine Getriebezentrale, d.h. Getriebebaueinheit 6 bei gleichzeitig hoher Wälzlagerlebensdauer erreicht.

Die erfindungsgemäße Lösung der Ausführung von Hohlwelle 11, Befestigungsflansch 19.2 und des ersten Kupplungsteiles 13 als einteiliges Bauelement ist für eine Vielzahl von integrierten Querantrieben 4 einsetzbar und nicht an eine konkrete Ausführung der Getriebebaueinheit 6 sowie der Antriebsmaschine 5 gebunden. Andere Ausführungen, welche im Tätigkeitsbereich des zuständigen Fachmannes liegen, sind ebenfalls denkbar.

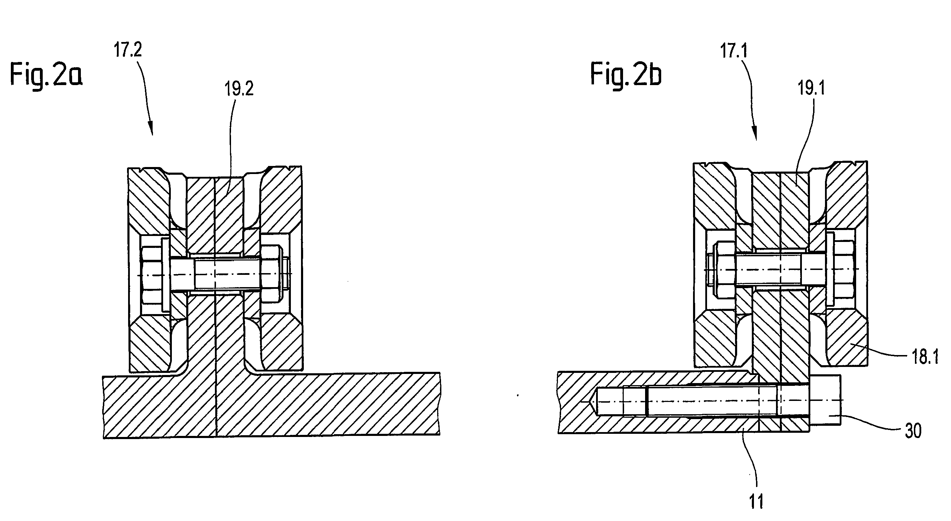

Gemäß Figur 2a ist der Befestigungsflansch 19.2 der zweiten Bremseinrichtung 17.2 einteilig mit der Hohlwelle 11 ausgeführt. Der Befestigungsflansch 19.1 der ersten Teilbremseinrichtung 17.1 ist als separates Bauelement drehfest mittels Befestigungselementen 30, beispielsweise in Form von Schraubelementen, welche in bestimmten Abständen in Umfangsrichtung des Befestigungsflansches 19.1 angeordnet sind, mit der Hohlwelle 11 verbunden. Eine konstruktive Ausführung der Anbindung der Bremsscheibe der zweiten Bremseinrichtung 17.2 an den Befestigungsflansch 19.2 ist in Figur 2a dargestellt. Figur 2b verdeutlicht eine mögliche konstruktive Ausführung der Anbindung der Bremsscheibe 18.1 an den Befestigungsflansch 19.1 der ersten Teilbremseinrichtung 17.1 1 und die Befestigung des Befestigungsflansches 19.1 an der Hohlwelle 11.

### Bezugszeichenliste

- 1: Antriebseinheit
- 2: Radantriebswelle
- 3: Radsatzwelle
- 4: Integrierter Querantrieb
- 5: Antriebsmaschine
- 6: Getriebebaueinheit
- 7: Antriebswelle
- 8: Eingang der Getriebebaueinheit
- 9: Kupplung
- 10: Abtrieb
- 11: Hohlwelle
- 12: Gelenkkupplung
- 13: Erstes Kupplungsteil der Gelenkkupplung
- 14: Zweites Kupplungsteil der Gelenkkupplung
- 15: Bremseinrichtung
- 16: Scheibenbremseinheit
- 17.1: Erste Teilbremseinrichtung
- 17.2: Zweite Teilbremseinrichtung
- 18.1: Bremsscheibe der ersten Teilbremseinrichtung
- 18.2: Bremsscheibe der zweiten Teilbremseinrichtung
- 19.1: Befestigungsflansch der ersten Teilbremseinrichtung
- 19.2: Befestigungsflansch der zweiten Teilbremseinrichtung
- 20: Gehäuse der Getriebebaueinheit
- 21: Gehäuse der Antriebsmaschine
- 22: Erster Stirnradzug
- 23: Zweiter Stirnradzug
- 24: Stirnrad
- 25: Zwischenwelle
- 26: Stirnrad
- 27: Zweites Stirnrad
- 28: Stirnrad
- 29: Lagerung
- 30: Befestigungselement
- D_{I29}: Innendurchmesser der Lagerung 29
- D_{A29}: Außendurchmesser der Lagerung 29
- D₁₂: Außendurchmesser der Gelenkkupplung
- D_{18.1}: Außendurchmesser der ersten Bremseinrichtung
- D_{18.2}: Durchmesser der zweiten Teilbremseinrichtung

## Patentansprüche

1. Antriebseinheit (1) zum Antrieb mindestens einer Radantriebswelle (2), insbesondere einer Radsatzwelle (3), für den Einsatz in Schienenfahrzeugen
1.1 mit einer Antriebsmaschine (5) und einer mit dieser gekoppelten Getriebebaueinheit (6);
1.2 der Abtrieb der Getriebebaueinheit (6) wird von einer Hohlwelle (11) gebildet, welche über eine Gelenkkupplung (12) mit der Radantriebswelle (2), insbesondere der Radsatzwelle (3) gekoppelt ist;
1.3 mit einer Bremseinrichtung (15);
1.4 ein Befestigungsflansch (19.2) für eine Teilbremseinrichtung (17.2) und die Hohlwelle (11) werden von einem Bauelement gebildet;
**gekennzeichnet durch** die folgenden Merkmale:
1.5 die Bremseinrichtung (15) umfaßt zwei Teitbremseinrichtungen = eine erste Teilbremseinrichtung (17.1) und eine zweite Teilbremseinrichtung (17.2);
1.6 das Gehäuse (20) der Getriebebaueinheit (6) ist einteilig ausgeführt;
1.7 die Hohlwelle (11) stutzt sich über eine Lageranordnung (29) im Gehäuse (20) ab;
1.8 der Außendurchmesser der Lageranordnung (29) ist für Ausführungen mit unterschiedlichem Außendurchmesser der Hohlwelle (11) gleich.

2. Antriebseinheit (1) nach Anspruch 1, **dadurch gekennzeichnet, daß** die Teilbremseinrichtungen (17.1, 17.2) als Scheibenbremseinrichtungen (16) ausgeführt sind, umfassend mindestens jeweils eine Bremsscheibe (18.1, 18.2) und der Befestigungsflansch (19.2) der Bremsscheibe (18.2) der einen Teilbremseinrichtung (17.2) und die Hohlwelle (11) von einem Bauelement gebildet werden.

3. Antriebseinheit (1) nach Anspruch 1 oder 2, **gekennzeichnet durch** die folgenden Merkmale:
**3.1** die erste Teilbremseinrichtung (17.1) und die zweite Teilbremseinrichtung (17.2) sind beidseitig der Getriebebaueinheit (6) angeordnet, wobei die zweite Teilbremseinrichtung (17.2) in Einbaulage zwischen der Getriebebaueinheit (6) und der Gelenkkupplung (12) angeordnet ist;
3.2 der Befestigungsflansch (19.1) der ersten Teilbremseinrichtung (17.1) ist als separates Bauteil ausgeführt;
3.3 mit Mitteln (30) zur Befestigung des ersten Befestigungsflansches (19.1) an der Hohlwelle (11).

4. Antriebseinheit (1) nach Anspruch 3, **gekennzeichnet durch** die folgenden Merkmale:
4.1 die Getriebebaueinheit (6) weist ein Gehäuse (20) auf;
4.2 die Betätigungseinrichtung der Teilbremseinrichtungen - erster Teilbremseinrichtung (17.1) und zweiter Teilbremseinrichtung (17.2) - sind am Gehäuse der Getriebebaueinheit (20) angeordnet und befestigt.

5. Antriebseinheit (1) nach einem der Ansprüche 1 bis 4, **dadurch gekennzeichnet, daß** die Hohlwelle (11) und der Befestigungsflansch (19.2) einstückig als Gußteil ausgeführt sind.

6. Antriebseinheit (1) nach einem der Ansprüche 1 bis 4, **dadurch gekennzeichnet, daß** die Hohlwelle (11) und der Befestigungsflansch (19.2) der zweiten Bremseinrichtung (17.2) einstückig als Schmiedeteil ausgeführt sind.

7. Antriebseinheit (1) nach einem der Ansprüche 1 bis 6, **gekennzeichnet durch** die folgenden Merkmale:
7.1 die Gelenkkupplung (12) umfaßt ein erstes, mit der Hohlwelle (11) gekoppeltes Kupplungsteil (13);
7.2 das erste Kupplungsteil (13) ist einteilig mit der Hohlwelle (11) ausgeführt.

8. Antriebseinheit (1) nach Anspruch 1, **dadurch gekennzeichnet, daß** beide Teilbremseinrichtungen - erste Teilbremseinrichtung (17.1) und zweite Teilbremseinrichtung (17.2) zwischen der Getriebebaueinheit (6) und der Gelenkkupplung (12) angeordnet sind und die Befestigungsflansche (19.1, 19.2) beiderTeilbremseinrichtungen (17.1, 17.2) einteilig mit der Hohlwelle (11) ausgeführt sind.

## Claims

1. A drive unit (1) for driving at least one wheel driveshaft (2), in particular a wheel axle (3), for use in rail vehicles
1.1 having a power plant (5) and a transmission module (6) coupled thereto;
1.2 the output of the transmission module (6) being formed by a hollow shaft (11), which is coupled via a joint coupling (12) to the wheel driveshaft (2), in particular to the wheel axle (3);
1.3 having a brake unit (15);
1.4 an attachment flange (19.2) for a partial brake unit (17.2) and the hollow shaft (11) being formed by one component;
**characterized by** the following features:
1.5 the brake unit (15) comprises two partial brake units - a first partial brake unit (17.1) and a second partial brake unit (17.2);
1.6 the housing (20) of the transmission module (6) is implemented in one piece;
1.7 the hollow shaft (11) is supported in the housing (20) via a bearing configuration (29);
1.8 the external diameter of the bearing configuration (29) is identical for embodiments having different external diameters of the hollow shaft (11).

2. The drive unit (1) according to Claim 1, **characterized in that** the partial brake units (17.1, 17.2) are implemented as disk brake units (16), each comprising at least one brake disk (18.1, 18.2) and the attachment flange (19.2) of the brake disk (18.2) of one partial brake unit (17.2) and the hollow shaft (11) is formed by one component.

3. The drive unit (1) according to Claim 1 or 2, **characterized by** the following features:
3.1 the first partial brake unit (17.1) and the second partial brake unit (17.2) are situated on both sides of the transmission module (6), the second partial brake unit (17.2) being situated between the transmission module (6) and the joint coupling (12) in the installed position;
3.2 the attachment flange (19.1) of the first partial brake unit (17.1) is implemented as a separate component;
3.3 having means (30) for attaching the first attachment flange (19.1) to the hollow shaft (11).

4. The drive unit (1) according to Claim 3, **characterized by** the following features:
4.1 the transmission module (6) has a housing (20);
4.2 the actuating units of the partial brake units - first partial brake unit (17.1) and second partial brake unit (17.2) - are situated on and attached to the housing of the transmission module (20).

5. The drive unit (1) according to one of Claims 1 through 4, **characterized in that** the hollow shaft (11) and the attachment flange (19.2) are implemented in one piece as a cast part.

6. The drive unit (1) according to one of Claims 1 through 4, **characterized in that** the hollow shaft (11) and the attachment flange (19.2) of the second brake unit (17.2) are implemented in one piece as a forged part.

7. The drive unit (1) according to one of Claims 1 through 6, **characterized by** the following features:
7.1 the joint coupling (12) comprises a first coupling part (13) coupled to the hollow shaft (11);
7.2 the first coupling part (13) is implemented in one piece with the hollow shaft (11).

8. The drive unit (1) according to Claim 1, **characterized in that** both partial brake units - first partial brake unit (17.1) and second partial brake unit (17.2) - are situated between the transmission module (6) and the joint coupling (12), and the attachment flanges (19.1, 19.2) of both partial brake units (17.1, 17.2) are implemented in one piece with the hollow shaft (11).

## Revendications

1. Unité d'entraînement (1) pour l'entraînement d'au moins un arbre d'entraînement de roues (2), en particulier d'un essieu (3), destinée à être utilisée dans des véhicules ferroviaires,
1.1 avec un moteur d'entraînement (5) et une unité de transmission (6) couplée à celui-ci;
1.2 la sortie de l'unité de transmission (6) est formée par un arbre creux (11), qui est couplé par un accouplement articulé (12) à l'arbre d'entraînement des roues (2), en particulier à l'essieu (3);
1.3 avec un dispositif de freinage (15);
1.4 une bride de fixation (19.2) pour un sous-ensemble de freinage (17.2) et l'arbre creux (11) sont formés par un élément de construction;
**caractérisée en ce que**:
1.5 l'installation de freinage (15) comprend deux sous-ensembles de freinage: un premier sous-ensemble de freinage (17.1) et un deuxième sous-ensemble de freinage (17.2);
1.6 le carter (20) de l'unité de transmission (6) est construit d'une seule pièce;
1.7 l'arbre creux (11) s'appuie par un dispositif de palier (29) dans le carter (20);
1.8 le diamètre extérieur du dispositif de palier (29) est le même pour les réalisations avec différents diamètres extérieurs de l'arbre creux (11).

2. Unité d'entraînement (1) selon la revendication 1, **caractérisée en ce que** les sous-ensembles de freinage (17.1, 17.2) sont réalisés comme des dispositifs de freins à disques (16), comprenant chacun au moins un disque de frein (18.1, 18.2), et la bride de fixation (19.2) du disque de frein (18.2) d'un sous-ensemble de freinage (17.2) et l'arbre creux (11) sont formés par un élément de construction.

3. Unité d'entraînement (1) selon la revendication 1 ou 2, **caractérisée en ce que**:
3.1 le premier sous-ensemble de freinage (17.1) et le deuxième sous-ensemble de freinage (17.2) sont disposés de part et d'autre de l'unité de transmission (6), le deuxième sous-ensemble de freinage (17.2) étant disposé, dans la position de montage, entre l'unité de transmission (6) et l'accouplement articulé (12);
3.2 la bride de fixation (19.1) du premier sous-ensemble de freinage (17.1) est réalisée comme un élément séparé;
3.3 des moyens (30) sont prévus pour fixer la première bride de fixation (19.1) sur l'arbre creux (11).

4. Unité d'entraînement (1) selon la revendication 3, **caractérisée en ce que**:
4.1 l'unité de transmission (6) possède un carter (20);
4.2 le dispositif d'actionnement des sous-ensembles de freinage, premier sous-ensemble de freinage (17.1) et second sous-ensemble de freinage (17.2), sont disposés et fixés sur le carter de l'unité de transmission (20).

5. Unité d'entraînement (1) selon l'une des revendications 1 à 4, **caractérisée en ce que** l'arbre creux (11) et la bride de fixation (19.2) sont réalisés d'un seul tenant sous la forme d'une pièce de fonte.

6. Unité d'entraînement (1) selon l'une des revendications 1 à 4, **caractérisée en ce que** l'arbre creux (11) et la bride de fixation (19.2) du second dispositif de freinage (17.2) sont réalisés d'un seul tenant sous la forme d'une pièce forgée.

7. Unité d'entraînement (1) selon l'une des revendications 1 à 6, **caractérisé en ce que**:
7.1 l'accouplement articulé (12) comprend une première partie d'accouplement (13) couplée à l'arbre creux (11);
7.2 la première partie d'accouplement (13) est construite d'un seul tenant avec l'arbre creux (11).

8. Unité d'entraînement (1) selon la revendication 1, **caractérisée en ce que** les deux sous-ensembles de freinage, premier sous-ensemble de freinage (17.1) et second sous-ensemble de freinage (17.2), sont disposés entre l'unité de transmission (6) et l'accouplement articulé (12) et les brides de fixation (19.1, 19.2) des deux sous-ensembles de freinage (17.1, 17.2) sont réalisées d'un seul tenant avec l'arbre creux (11).
